# EUROPÄISCHE PATENTSCHRIFT

(11) **EP 1 030 097 B1**
(45) Veröffentlichungstag und Bekanntmachung des Hinweises auf die Patenterteilung: **06.12.2006**
(21) Anmeldenummer: 00102021.3
(22) Anmeldetag: 02.02.2000
(51) Int. Cl.: F16L 55/11, B29C 45/16, F16L 33/22

(54) **Anschlussarmatur mit einem Armaturkörper mit drehbarer Befestigung**
Connecting device having an armature body rotatably fastened
Dispositif de raccordement ayant un corps d'armature à fixation rotative

(30) Priorität: 18.02.1999 DE 19906870
(43) Veröffentlichungstag der Anmeldung: 23.08.2000
(73) Patentinhaber: Anton Hummel Verwaltungs GmbH, 79183 Waldkirch (DE)
(72) Erfinder: Seifert, Rainer, 79189 Bad Krozingen (Tunsel) (DE); Steiner, Rolf, 79194 Gundelfingen (DE); Gerber, Helmut, 79183 Waldkirch (DE); Adolf, Jürgen, 79211 Gundelfingen (DE)
(74) Vertreter: Maucher, Wolfgang

(56) Entgegenhaltungen:
- EP-A- 0 341 880
- DE-A- 19 508 509
- DE-C- 4 343 005
- DE-C- 4 440 852

## Beschreibung

Die Erfindung betrifft eine Anschlußarmatur mit einem Armatur- oder Anschlußkörper, der unmittelbar selbst oder mittelbar eine drehbare Befestigungseinrichtung wie Gewinde oder Bajonettverschluß und wenigstens eine Dichtung aufweist, beispielsweise Verschlußstopfen für Heizkörper oder sonstige Flüssigkeitsbehälter, Entlüftungsventil, Rohrverbinder, Deckel, Anschlageinsatz, Stützhülse und/oder Klemmring für eine Rohrverschraubung oder dergleichen, wobei der Armatur- oder Anschlußkörper und die Dichtung ein Mehrkomponenten-Kunststoffteil sind, bei welchem der Armatur- oder Anschlußkörper aus der härteren Kunststoffkomponente und die Dichtung aus der anderen weicheren Kunststoffkomponente gebildet sind.

Derartige Anschlußarmaturen sind in vielfältiger Form je nach Anwendung bekannt. Beispielsweise kennt man Verschlußstopfen für Heizkörper oder gemäß DE 44 40 852 C1 für sonstige Flüssigkeitsbehälter oder ein Entlüftungsventil gemäß DE 297 15 018 oder einen Rohrverbinder gemäß DE 27 15 525 C2 oder einen Deckel gemäß DE 195 08 509 A1. Bei diesen Fällen oder auch weiteren vergleichbaren Anordnungen besteht dabei der eigentliche Armaturkörper aus dem harten Kunststoff und die Dichtung aus dem weichen Kunststoff. Somit ist die Handhabung einer solchen Anschlußarmatur der genannten Art für den Benutzer einfach.

Aus der deutschen Gebrauchsmusterschrift DE 93 15 601 U1 und aus DE 44 03 702 C2, Figur 16 sind Anschlußarmaturen mit Armatur- oder Anschlußkörpern in Form von Anschlageinsätzen für anzuschließende Rohre bekannt, welche aus Kunststoff betehen könnten und nicht selbst eine Befestigungseinrichtung wie ein Gewinde haben, aber indirekt mittels Überwurfmutter und Gegenstück fixiert werden und ebenfalls Dichtungen aus weicherem Werkstoff an ihrem Anschlag und/oder einer zugehörigen Stützhülse aufweisen.

Es hat sich gezeigt, daß bei verschiedenen Anwendungsfällen die Dichtung durch die Gegenfläche beschädigt werden kann, wenn diese rauh oder uneben ist, Verunreinigungen durch restliche Späne oder noch einen Grat aufweist. Wird die Anschlußarmatur für ihre Befestigung verdreht, um ihr Schraubgewinde oder ihren Bajonettverschluß in die entsprechende Montagestellung zu bringen, kann eine Relativverdrehung zwischen Dichtung und Gegenfläche auftreten und die Dichtung über eine unter Umständen unebene, zerklüftete oder verunreinigte Gegenfläche reiben und dadurch erheblich beschädigt werden.

Es besteht deshalb die Aufgabe, eine Armatur mit Dichtung in Mehrkomponenten-Kunststoffausführung zu schaffen, bei welcher der Vorteil der Herstellung in einem Spritzgießwerkzeug oder Spritzvorgang und/oder der Vorteil erhalten bleibt, daß der Benutzer praktisch nur ein einziges Teil montieren muß, trotzdem aber beim Eindrehen dieser Armatur die Dichtung von der Gegenfläche nicht zerstört oder beschädigt werden kann.

Zur Lösung dieser scheinbar widersprüchlichen Aufgabe ist die eingangs erwähnte Anschlußarmatur dadurch gekennzeichnet, daß die beiden unterschiedlichen, sie bildenden Kunststoffkomponenten miteinander inkompatible Kunststoffe sind und die mit dem Armatur-oder Anschlußkörper gemeinsam hergestellte Dichtung in axialer Richtung an dem Armatur- oder Anschlußkörper formschlüssig, in Drehrichtung aber beweglich, also relativ zu dem Armatur- oder Anschlußkörper verdrehbar angeordnet ist.

Die Erfindung macht sich dabei die Erkenntnis zunutze, daß bei einer Herstellung eines Mehrkomponenten-Gegenstandes aus inkompatiblen Kunststoffen diese zwar in vorteilhafter Weise gemeinsam hergestellt und dadurch gleich bei der Herstellung miteinander verbunden werden können, trotzdem aber nicht aneinander haften. Bei entsprechender Formgebung kann also die Dichtung mit dem Armatur- oder Anschlußkörper - im folgenden der Einfachheit halber nur "Armaturkörper" genannt - im Spritzgießverfahren hergestellt werden und dennoch anschließend relativ zu dem Armaturkörper verdrehbar sein, so daß beim Eindrehen der Armatur und bei Kontakt der Dichtung mit einer unebenen und zerklüfteten Gegenfläche die Dichtung bei der weiteren Verdrehung des Armaturkörpers nicht mitgedreht und dadurch eine zu starke Beschädigung der Dichtung vermieden wird. Dabei kann axialer Formschluß in einer Richtung, nämlich entgegen der Einschraub- oder Eindrehrichtung genügen.

Zweckmäßig ist es, wenn der Armaturkörper aus POM und die Dichtung aus einem thermoplastischen Elastomer oder aus Kautschuk wie EPDM oder aus Silikon besteht. POM ist ein harter dauerhafter Kunststoff, der sich dazu eignet, einen Armaturkörper mit Gewinde oder Bajonettverschluß auch für robuste Einsätze zu bilden, und der eine sehr geringe Wasseraufnahmefähigkeit hat, also eine lange Lebensdauer auch bei einer Anwendung im Heizungsbau an Heizkörpern oder Heizleitungen mit extremen Temperaturschwankungen erlaubt. Thermoplastische Elastomere oder Kautschuk oder Silikon hingegen sind für Dichtungen bewährte Werkstoffe, die aber in einem Spritzgießvorgang zusammen mit dem Armaturkörper gefertigt werden können, so daß eine nachträgliche Montage in vorteilhafter Weise entfällt. Da diese verschiedenen Kunststoffe aber jeweils inkompatibel miteinander sind, ergibt sich schon bei der Herstellung der Armatur, daß die beiden Teile nicht fest miteinander verbunden und verschmolzen sind, wie es bei sonst üblichen Mehrkomponenten-Kunststoffteilen der Fall ist, sondern der Dichtring kann in einer in dem Armaturkörper eigens für ihn ausgesparten Ringnut verdreht beziehungsweise festgehalten werden, während die Armatur relativ zu dem Dichtring verdreht wird. Somit ist beim Befestigen der Anschlußarmatur mittels Gewinde oder Bajonettverschluß eine Verletzung oder Beschädigung der Dichtung auch dann vermieden, wenn die Gegendichtfläche schneidende oder schabende Vorsprünge oder dergleichen Unebenheiten aufweist.

Zweckmäßig ist es, wenn die ringförmige Dichtung wenigstens eine an ihrem Dichtungsbereich umlaufende Vertiefung oder Ringnut aufweist und im Bereich dieser Vertiefung oder Ringnut in axialer Richtung nachgiebig ist. Durch eine solche sich am freien Umfang der Dichtung öffnende Ringnut ergibt sich, daß die Dichtung nicht nur aufgrund ihres weichen Werkstoffes, sondern auch aufgrund dieser Formgebung in axialer Richtung zusammendrückbar ist. Entsprechend gut kann sich die Dichtung an Unebenheiten der Gegendichtfläche anpassen.

Günstig ist es dabei, wenn die radiale Tiefe der Vertiefung oder Ringnut etwa gleich oder kleiner als der radiale Überstand der unverformten Dichtung gegenüber dem Außendurchmesser des Gewindes des Armatur- oder Anschlußkörpers ist. Im Gewindebereich ist die Dichtung dann kompakt und entsprechend stabil, während der vor allem zur Abdichtung einer Gegenfläche dienende Überstand die gewünschte Nachgiebigkeit und Anpaßbarkeit hat.

Bei einer Anschlußarmatur der genannten Art mit einem Gewinde und einem in Einschraubrichtung hinter dem Gewinde angeordneten Anschlag kann die Dichtung im Verlauf des Gewindes oder zwischen dem Gewinde und dem Anschlag angeordnet sein. Vor allem der letztgenannte Fall ist häufig bei Verschlußstopfen, Blindstopfen, Entlüftungsventilen, Rohranschlüssen, Rohrverschraubungen usw. gegeben. Beim Verschrauben einer solchen Anschlußarmatur mit einem ein entsprechendes Gegengewinde aufweisenden Gegenstück kommt dieses schließlich in Kontakt mit der Dichtung, wobei die Dichtung sich dann relativ zu der Anschlußarmatur oder aber zu diesem Gegenstück verdrehen kann, je nach dem, wo die geringere Reibung auftritt. Ergibt sich zwischen der Dichtung und der Gegenfläche aufgrund von Unebenheiten, Vorsprüngen oder scharfen Kanten eine zu große Reibung, wird die Dichtung relativ zu der weiter verdrehten Anschlußarmatur stehenbleiben, also nicht weiter mitgedreht, so daß eine Beschädigung und daraus resultierende Undichtigkeiten weitestgehend ausgeschlossen werden.

Die Dichtung kann bei einer andersartigen Anschlußarmatur auch zwischen einem Anschlag und einem Bajonettverschluß des Armaturkörpers angeordnet werden. Dabei ergibt sich dann eine ähnliche Wirkungsweise wie bei einer Anordnung an einer Anschlußarmatur mit Gewinde.

Vor allem bei Kombination einzelner oder mehrerer der vorbeschriebenen Merkmale und Maßnahmen ergibt sich eine Anschlußarmatur in beliebiger Anpassung an unterschiedliche Verwendungen, beispielsweise als Rohranschluß, Verschlußstopfen oder Entlüftungsventil oder dergleichen, bei welcher der Armaturkörper und die als Dichtring ausgebildete Dichtung schon bei der Herstellung miteinander verbunden sind, also eine nachträgliche Montage des Dichtringes an der Armatur vermieden wird, trotzdem aber der Dichtring relativ zu dem Armaturkörper verdrehbar ist, so daß bei Berührung mit einer den Dichtring unter Umständen beschädigenden Gegenfläche eine solche Relativbewegung zwischen Dichtring und Gegenfläche vermieden werden kann, in dem diese Relativbewegung an den Armaturkörper verlegt ist.

Nachstehend sind Ausführungsbeispiele der Erfindung anhand der Zeichnung näher beschrieben. Es zeigt:
- Fig.1: eine zur Hälfte längsgeschnittene Seitenansicht einer Anschlußarmatur in Form eines Blindstopfens,
- Fig.2: einen Längsschnitt einer Rohrverschraubung mit einem Anschlageinsatz für das Rohr ohne in das Rohrinnere eingreifende Stützhülse, wobei der Anschlageinsatz eine außenseitig umlaufende Dichtung und in seinem Anschlagbereich eine mit der Stirnseite des eingesetzten Rohres zusammenwirkende Dichtung aufweist sowie
- Fig.3: eine der Fig.2 entsprechende Darstellung einer Rohrverschraubung mit Anschlageinsatz, der eine in das Rohr eingreifende Stützhülse aufweist, wobei neben der an dem Anschlageinsatz außen umlaufenden Dichtung eine weitere Dichtung an der Stützhülse vorgesehen ist.

Bei den nachfolgend beschriebenen Ausführungsbeispielen erhalten übereinstimmende oder sich entsprechende Teile dieselben Bezugszahlen, auch wenn sie in ihrer Gestaltung voneinander abweichen.

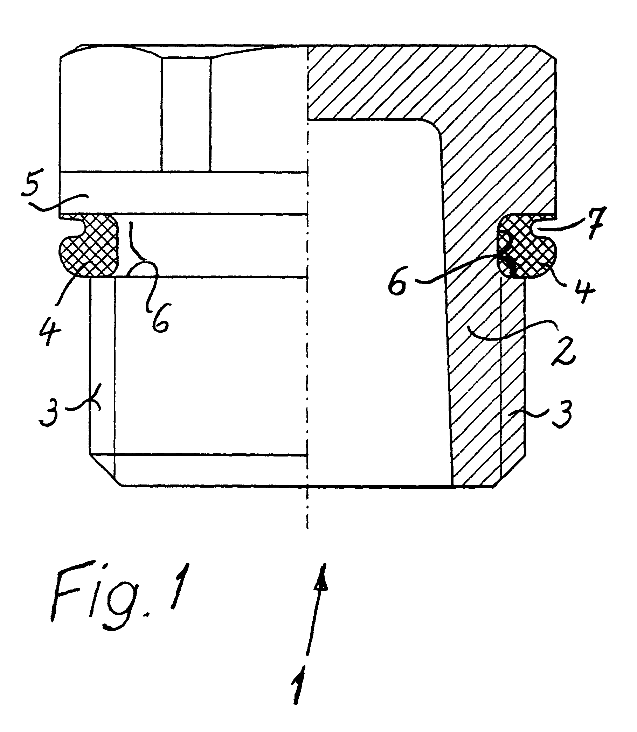

Eine im ganzen mit 1 bezeichnete, im Ausführungsbeispiel nach Fig.1 als Blindstopfen ausgebildete Anschlußarmatur, die aber auch als Rohrverbinder, Schraubhülse eines Rohranschlusses oder eines Entlüftungsventiles usw. ausgebildet sein könnte, weist einen Armaturkörper 2 mit einem Außengewinde 3 für die Befestigung an einem Gegenstück und eine ringförmige Dichtung 4 auf, die zwischen dem Gewinde 3 und einem Anschlag 5 in einer Nut 6 angeordnet ist.

Diese Anschlußarmatur 1 ist ein Mehrkomponenten-Kunststoffteil, das heißt der Armaturkörper 2 ist aus einer härteren Kunststoffkomponente und die Dichtung 4 aus einer anderen weicheren Kunststoffkomponente gefertigt.

Dabei ist vorgesehen, daß die beiden unterschiedlichen Kunststoffkomponenten aus miteinander inkompatiblen Kunststoffen bestehen, so daß die mit dem Armaturkörper 2 gemeinsam hergestellte Dichtung 4 in axialer Richtung aufgrund ihrer Anordnung in der Nut 6 formschlüssig, in Drehrichtung aber beweglich, also relativ zu dem Armaturkörper 2 verdrehbar angeordnet ist.

Wird diese Anschlußarmatur 1 mittels des Gewindes 3 in ein Gegengewinde eingeschraubt und dadurch die Dichtung 4 in Kontakt mit einer Gegendichtfläche gebracht, die eine große Reibung auf die Dichtung 4 ausübt, bleibt bei einer weiteren Verdrehung des Armaturkörpers 2 die Dichtung stehen, weil eine Relativverdrehung zwischen Armaturkörper 2 und Dichtung 4 möglich ist. Dadurch wird vermieden, daß die Dichtung 4 durch eine Relativbewegung gegenüber der erwähnten Gegenfläche beschädigt oder undicht wird.

Man erkennt in Figur 1, daß die ringförmige Dichtung 4 eine an ihrem Dichtungsbereich außenseitig umlaufende nach außen offene Ringnut 7 aufweist, so daß sie im Bereich dieser Ringnut 7 in axialer Richtung nachgiebig ist. Dadurch kann sich diese Dichtung nicht nur aufgrund der Weichheit ihres Werkstoffes, sondern auch aufgrund dieser Ringnut 7 an eine Gegenfläche anpassen, die möglicherweise nicht vollständig rund oder plan ist, sondern Unebenheiten oder dergleichen aufweist. Dies ist deshalb möglich, weil die Dichtung 4 bei ihrem Andrücken an eine solche Gegenfläche trotz der Einschraubbewegung an dem Armaturkörper 2, im Ausführungsbeispiel dem Blindstopfen, nicht mitgedreht werden muß, obwohl sie mit diesem Körper 2 gemeinsam in einem Spritzgießverfahren hergestellt wurde.

Die radiale Tiefe dieser Ringnut 7 ist im Ausführungsbeispiel dabei etwa gleich dem radialen Überstand der unverformten Dichtung 4 gegenüber dem Außendurchmesser des Gewindes 3, im Ausführungsbeispiel eines Außengewindes, des Armaturkörpers 2. Im Durchmesserbereich des Gewindes 3 hingegen ist die Dichtung kompakt und stabil und behält deshalb auch ihre Verdrehbarkeit auch gegenüber dem Armaturkörper 2 selbst unter stärkerer axialer Druckbelastung bei. Analog kann die Ringnut 7 bei einer im Inneren einer Hülse, eines Stutzens oder eines Rohres angeordneten Dichtung 4 radial nach innen offen sein.

Im Ausführungsbeispiel nach Fig.1 ist die Dichtung 2 zwischen dem Gewinde 3 und dem Anschlag 5 angeordnet. Es ist aber auch möglich, eine solche Dichtung im Verlauf eines Gewindes vorzusehen, falls die Anschlußarmatur mit Dichtung nicht gegen eine Stirnseite oder dergleichen Gegenfläche, sondern in eine Hülse oder einen Stutzen oder dergleichen eingebracht werden soll.

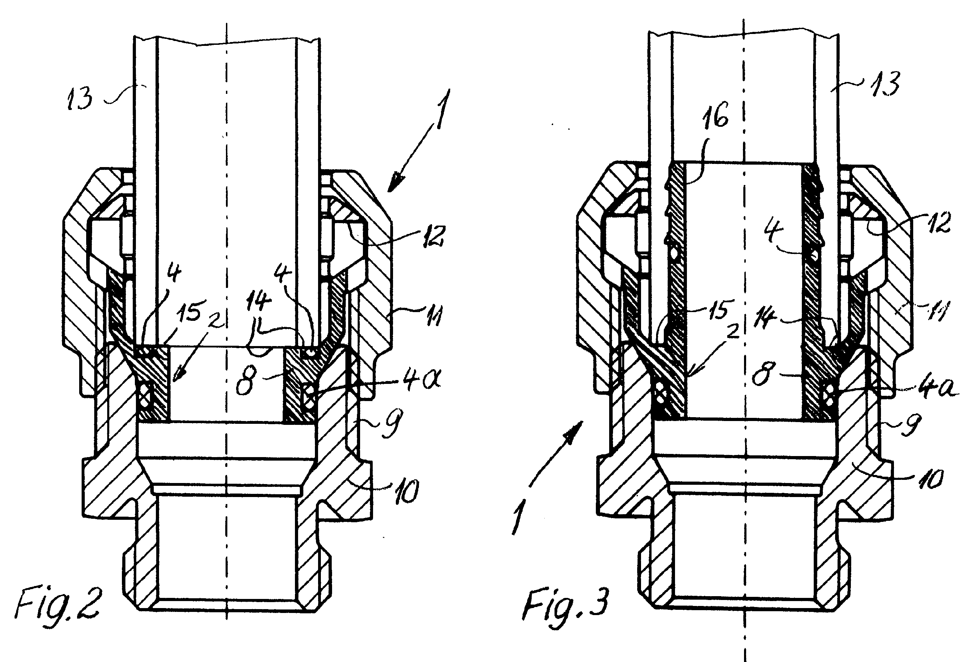

Die Figuren 2 und 3 zeigen jeweils Ausführungsbeispiele einer im ganzen mit 1 bezeichneten Anschlußarmatur in Form einer Rohrverschraubung etwa gemäß DE 93 15 601 U1 mit einem im ganzen mit 8 bezeichneten Anschlageinsatz als Armaturkörper 2, der in einer mit einem Außengewinde 9 versehenen Aufnahmehülse 10 gehalten und mittels einer Überwurfmutter 11 und einem Klemmeinsatz 12 befestigt wird. Ein zu fixierendes Rohr 13 reicht mit seiner Stirnseite 14 bis an eine Anschlagfläche 1 5 des Anschlageinsatzes 8 und kann in bekannter Weise mit Hilfe des Klemmeinsatzes 12 festgespannt und festgehalten werden.

Im Ausführungsbeispiel nach Figur 2 hat der Anschlageinsatz 8 keine in das Rohr eingreifende Stützhülse, sondern eine in seine Anschlagfläche 15 eingearbeitete Dichtung 4, die mit der Stirnseite 14 des Rohres zusammenwirkt und aus einem Kunststoff besteht, der mit dem Kunststoff des Anschlageinsatzes 8 inkompatibel ist.

Ferner ist noch eine Dichtung 4a an der Außenseite des Anschlageinsatzes 8 vorgesehen, die mit der Aufnahmehülse 10 zusammenwirkt und ebenfalls aus einem Kunststoff bestehen kann, der mit dem der Anschlaghülse 8 inkompatibel ist.

Beim Einfügen des Rohres 13 und bei der Verschraubung auftretende Relativverdrehungen, insbesondere im letzten Teil der Befestigung, wenn der Klemmeinsatz 12 das Rohr 13 schon erfaßt hat und auch der Anschlageinsatz 8 durch konische Flächen fixiert ist, kann es zu Relativverdrehungen zwischen dem Rohr 13 und der Dichtung 4 kommen, wobei dann die Dichtung 4 gegenüber dem Anschlageinsatz 8 mitverdreht werden kann, weil die beiden unterschiedlichen Kunststoffkomponenten dieses aus mehreren Kunststoffkomponenten gebildeten Anschlageinsatzes 8 miteinander inkompatible Kunststoffe sind und eine relative Verdrehung erlauben.

Fig.3 zeigt ein Ausführungsbeispiel ähnlich dem nach Fig.2, wobei ebenfalls eine Anschlußarmatur 1 in Form einer Rohrverschraubung mit übereinstimmenden Teilen zu der nach Fig.2 vorgesehen sind. Der Anschlageinsatz 8 weist jedoch in diesem Falle eine Stützhülse 16 auf, die von der Anschlagfläche 15 ausgehend in das Innere des Rohres 13 eingreift und eine bessere Verklemmung erlaubt. Dabei ist die aus inkompatiblem Kunststoff gegenüber dem des Anschlageinsatzes 8 bestehende Dichtung 4 in diesem Falle an der Außenseite dieser Stützhülse 16 vorgesehen. Sowohl die Dichtung 4 als auch die Dichtung 4a können auch in diesem Falle je nach Relativverdrehung und Belastung durch die Gegenflächen gegenüber dem Anschlageinsatz 8 verdreht werden, weil sie zwar mit diesem zusammen ein Mehrkomponentenkunststoffteil sind, aber aus einem Kunststoff bestehen, der mit dem des eigentlichen Anschlageinsatzes inkompatibel ist.

Die Anschlußarmatur 1, beispielsweise ein Blindstopfen, Ventilkörper, Rohrverbindungsstück oder dergleichen mit einem Armaturkörper 2 mit einer Dichtung 4 ist ein Mehrkomponenten-Kunststoffteil, bei welchem die beiden Kunststoffkomponenten nicht miteinander kompatibel sind, so daß die ringförmige Dichtung 4 relativ zu dem Armaturkörper 2 verdrehbar ist, insbesondere wenn sie auf eine unebene oder zerklüftete Gegenfläche stößt, durch welche sie beschädigt werden könnte, falls sie beim Eindrehen oder Einschrauben der Anschlußarmatur 1 relativ zu dieser Gegenfläche weiter verdreht würde.

## Patentansprüche

1. Anschlußarmatur (1) mit einem Armatur- oder Anschlußkörper (2,8), der unmittelbar selbst oder mittelbar eine drehbare Befestigungseinrichtung wie Gewinde (3) oder Bajonettverschluß und wenigstens eine Dichtung (4) aufweist, beispielsweise Verschlußstopfen für Heizkörper oder sonstige Flüssigkeitsbehälter, Entlüftungsventil, Rohrverbinder, Deckel, Anschlageinsatz, Stützhülse und/oder Klemmring für eine Rohrverschraubung oder dergleichen, wobei der Armatur- oder Anschlußkörper und die Dichtung ein Mehrkomponenten-Kunststoffteil sind, bei welchem der Armatur- oder Anschlußkörper (2) aus der härteren Kunststoffkomponente und die Dichtung (4) aus der anderen weicheren Kunststoffkomponente gebildet sind, **dadurch gekennzeichnet, daß** die beiden unterschiedlichen Kunststoffkomponenten miteinander inkompatible Kunststoffe sind und die mit dem Armatur- oder Anschlußkörper (2,8) gemeinsam hergestellte Dichtung (4) in axialer Richtung an dem Armaturkörper formschlüssig, in Drehrichtung aber beweglich, also relativ zu dem Armatur- oder Anschlußkörper (2) verdrehbar angeordnet ist.

2. Anschlußarmatur nach Anspruch 1, **dadurch gekennzeichnet, daß** der Armatur- oder Anschlußkörper (2,8) aus POM und die Dichtung aus einem thermoplastischen Elastomer oder aus Kautschuk wie EPDM oder aus Silikon besteht.

3. Anschlußarmatur nach Anspruch 1 oder 2, **dadurch gekennzeichnet, daß** die ringförmige Dichtung (4) wenigstens eine an ihrem Dichtungsbereich umlaufende Vertiefung oder Ringnut (7) aufweist und im Bereich dieser Vertiefung oder Ringnut (7) in axialer Richtung nachgiebig ist.

4. Anschlußarmatur nach Anspruch 3, **dadurch gekennzeichnet, daß** die radiale Tiefe der Vertiefung oder Ringnut (7) etwa gleich oder kleiner als der radiale Überstand der unverformten Dichtung (4) gegenüber dem Außendurchmesser des Gewindes (3) des Armatur- oder Anschlußkörpers (2) ist.

5. Anschlußarmatur mit einem Gewinde und einem in Einschraubrichtung hinter dem Gewinde angeordneten Anschlag nach einem der vorstehenden Ansprüche, **dadurch gekennzeichnet, daß** die Dichtung (4) im Verlauf des Gewindes oder zwischen dem Gewinde (3) und dem Anschlag (5) angeordnet ist.

6. Anschlußarmatur nach einem der Ansprüche 1 bis 4, **dadurch gekennzeichnet, daß** die Dichtung zwischen einem Anschlag und einem Bajonettverschluß des Armatur- oder Anschlußkörpers angeordnet ist.

7. Anschlußarmatur nach einem der vorstehenden Ansprüche, **dadurch gekennzeichnet, daß** die Dichtung (4) als Dichtring in einer in dem Armatur- oder Anschlußkörper (2) ausgesparten Nut (6) verdrehbar gehalten ist.

8. Anschlußarmatur nach einem der Ansprüche 1 bis 7, mit einem in eine Verschraubung einsetzbaren Armatur- oder Anschlußkörper, insbesondere Anschlageinsatz (8) mit oder ohne Stützhülse (16), **dadurch gekennzeichnet, daß** die Dichtung (4,4a) in einer Ringnut an der innenseitigen Anschlagfläche (15) und/oder an einer Außenseite des als Anschlageinsatz (8) ausgebildeten Armaturkörpers (2) und/oder an der Stützhülse (16) angeordnet ist.

## Claims

1. Connecting fitting (1) with a fitting or connecting member (2, 8) which comprises itself directly or indirectly a rotatable fixing device such as a thread (3) or bayonet closure and at least one seal (4), for example a sealing plug for radiators or other liquid containers, a venting valve, pipe connector, cover, abutment insert, support sleeve and/or clamping ring for a screw connection or the like for a pipe, wherein the fitting or connecting member and the seal constitute a multi-component plastics part in which the fitting or connecting member (2) is formed from the hard plastics component and the seal (4) is formed from the other softer plastics component, **characterised in that** the two different plastics components are plastics which are incompatible with one another and the seal (4) which is manufactured jointly with the fitting or connecting member (2, 8) is mounted to engage by interlocking on the fitting member in the axial direction but so as to be movable in the direction of rotation, i.e. rotatable relative to the fitting or connecting member (2).

2. Connecting fitting according to claim 1, **characterised in that** the fitting or connecting member (2, 8) consists of POM and the seal consists of a thermoplastic elastomer or rubber such as EPDM or silicon.

3. Connecting fitting according to clam 1 or 2, **characterised in that** the annular seal (4) has at least one depression or annular groove (7) encircling it at its sealing area and is axially yielding in the region of this depression or annular groove (7).

4. Connecting fitting according to claim 3, **characterised in that** the radial depth of the depression or annular groove (7) is substantially equal to or less than the radial projection of the undeformed seal (4) relative to the outer diameter of the thread (3) of the fitting or connecting member (2).

5. Connecting fitting having a thread and an abutment arranged behind the thread in the direction of screwing in, according to one of the preceding claims, **characterised in that** the seal (4) is arranged at some point along the thread or between the thread (3) and the abutment (5).

6. Connecting fitting according to one of claims 1 to 4, **characterised in that** the seal is arranged between an abutment and a bayonet closure of the fitting or connecting member.

7. Connecting fitting according to one of the preceding claims, **characterised in that** the seal (4) is rotatably held as a sealing ring in a groove (6) formed in the fitting or connecting member (2).

8. Connecting fitting according to one of claims 1 to 7, having a fitting or connecting member which can be inserted in a screw connection, particularly an abutment insert (8) with or without a support sleeve (16), **characterised in that** the seal (4, 4a) is arranged in an annular groove on the interior abutment surface (15) and/or on an exterior of the fitting member (2) constructed as the abutment insert (8) and/or on the support sleeve (16).

## Revendications

1. Dispositif ou armature de raccordement (1) comprenant un corps de robinet ou de raccordement (2, 8) qui présente directement ou indirectement ou de manière contiguë ou non un dispositif de fixation par rotation tel qu'un filetage (3) ou une fermeture à baïonnette et au moins une garniture d'étanchéité (4), par exemple un bouchon de fermeture pour radiateur ou autres équipements contenant du liquide, un purgeur d'air ou une soupape d'évacuation, un raccord de tuyaux, un couvercle, un insert de butée, un manchon d'appui ou de support et/ou une bague de serrage pour un raccord vissé ou analogue, le corps de robinet ou de raccordement et la garniture d'étanchéité étant une pièce en matière plastique à plusieurs composants, le corps de robinet ou de raccordement (2) étant formé par le composant de matière plastique le plus dur et la garniture d'étanchéité (4), par l'autre composant de matière plastique, le plus souple, **caractérisé en ce que** les deux composants de matière plastique différents sont des matières plastiques incompatibles l'une avec l'autre et **en ce que** la garniture d'étanchéité (4) fabriquée en même temps que le corps de robinet ou de raccordement (2, 8) est montée par engagement positif sur le corps de robinet de manière à être fixe dans la direction axiale, mais mobile en rotation, c'est-à-dire de manière à pouvoir tourner par rapport au corps de robinet ou de raccordement (2).

2. Dispositif de raccordement selon la revendication 1, **caractérisé en ce que** le corps de robinet ou de raccordement (2, 8) est en POM et la garniture d'étanchéité, en un élastomère thermoplastique, en un caoutchouc tel que l'EDPM ou encore en silicone.

3. Dispositif de raccordement selon la revendication 1 ou 2, **caractérisé en ce que** la garniture d'étanchéité (4) annulaire présente au moins un renfoncement ou une rainure annulaire (7) autour de sa zone d'étanchéité et est souple axialement dans la zone de ce renfoncement ou de cette rainure annulaire (7).

4. Dispositif de raccordement selon la revendication 3, **caractérisé en ce que** la profondeur radiale du renfoncement ou de la rainure annulaire (7) est approximativement identique ou inférieure au débord radial de la garniture d'étanchéité (4) non déformée par rapport au diamètre extérieur du filetage (3) du corps de robinet ou de raccordement (2).

5. Dispositif de raccordement doté d'un filetage et d'une butée située derrière le filetage dans le sens de vissage, selon l'une des revendications précédentes, **caractérisé en ce que** la garniture d'étanchéité (4) est placée sur le filetage ou entre le filetage (3) et la butée (5).

6. Dispositif de raccordement selon l'une des revendications 1 à 4, **caractérisé en ce que** la garniture d'étanchéité est disposée entre une butée et une fermeture à baïonnette du corps de robinet ou de raccordement.

7. Dispositif de raccordement selon l'une des revendications précédentes, **caractérisé en ce que** la garniture d'étanchéité (4) est maintenue avec possibilité de torsion, en tant que bague d'étanchéité, dans une rainure (6) ménagée dans le corps de robinet ou de raccordement (2).

8. Dispositif de raccordement selon l'une des revendications 1 à 7, comprenant un corps de robinet ou de raccordement pouvant être mis en place dans un raccord vissé, notamment insert de butée (8) avec ou sans manchon d'appui ou de support (16), **caractérisé en ce que** la garniture d'étanchéité (4, 4a) est disposée dans une rainure annulaire sur la surface de butée (15) située à l'intérieur et/ou sur une face extérieure du corps de robinet (2) réalisé en tant qu'insert de butée (8) et/ou sur le manchon d'appui ou de support (16).
